# EUROPEAN PATENT SPECIFICATION

(11) **EP 3 771 553 B1**
(45) Date of publication and mention of the grant of the patent: **17.01.2024**
(21) Application number: 20188556.3
(22) Date of filing: 30.07.2020
(51) Int. Cl.: B29D 11/00, D06P 5/20, D06P 5/28, D06P 5/00, B23K 26/03, B23K 26/082

(54) **DYEING APPARATUS AND DYEING METHOD**
FÄRBEVORRICHTUNG UND FÄRBEVERFAHREN
APPAREIL ET PROCÉDÉ DE TEINTURE

(30) Priority: 30.07.2019 JP 2019140233
(43) Date of publication of application: 03.02.2021
(73) Proprietor: Nidek Co., Ltd., Gamagori-shi, Aichi, 443-0038 (JP); Shizuoka Prefecture, Shizuoka (JP)
(72) Inventor: INUZUKA, Minoru, Gamagori, Aichi (JP); ABE, Koji, Gamagori, Aichi (JP); SHIBATA, Ryoji, Gamagori, Aichi (JP); SHIBAMOTO, Takahisa, Gamagori, Aichi (JP); UETA, Hiroyasu, Hamamatsu, Shizuoka (JP); NAGATSU, Yoshiyuki, Hamamatsu, Shizuoka (JP)
(74) Representative: Hoefer & Partner Patentanwälte mbB

(56) References cited:
- JP-A- 2018 127 722
- US-A1- 2011 018 175
- US-A1- 2018 127 918

## Description

### TECHNICAL FIELD

The present disclosure relates to a dyeing apparatus and a dyeing method of dyeing a resin body with using laser light.

### BACKGROUND

In the related art, as a method of dyeing a resin body such as a plastic lens, a method of immersing the lens in a dyeing solution for a predetermined time to dye the lens (dip dyeing method) is known. Although this method has been used in the related art, it has been a problem that a working environment is not pleasant and it is difficult to dye a lens having a high refractive index. Therefore, the present applicant has proposed a dyeing method by applying (outputting) a dyeing ink containing a sublimable dye onto a substrate such as paper using an inkjet printer, placing the substrate in non-contact with the lens in a vacuum, and flying the sublimable dye to the lens side for dyeing (hereinafter referred to as "gas phase transfer dyeing method") (refer to, for example, Patent Document 1 shown below). In this method, the dye is fixed on the lens surface by heating the entire lens in an oven.

In addition, in such a gas phase transfer dyeing method, the resin body may turn yellow when a heating temperature required for fixing is high. In order to solve such a problem, a method is proposed in which laser light is scanned (line scanned) so as to traverse the resin body (for example, refer to FIG. 3 of Patent Document 2 shown below), and a surface of the resin body is partially heated to fix the dye. In addition, when fixing is performed by the laser light, color unevenness is likely to occur in a case where the entire region of the resin body (surface to be dyed) on which the dye is deposited under a constant output condition is irradiated with the laser light without considering the change in the thickness of the resin body.

In order to cope with this, a method is proposed in which an irradiation condition of the laser light to a heated portion on the resin body is changed appropriately, so that the heating temperature (surface temperature) of the resin body surface due to the irradiation of the laser light is substantially the same as the heating temperature in the entire region to be dyed (for example, refer to Patent Document 2 shown below). For example, there has been proposed a method of suppressing the color unevenness by changing the output condition of the laser light based on the information on the resin body. In addition, for example, a method has been proposed in which the temperature at a laser irradiation position is detected and the output condition of the laser light is changed based on the detection result to suppress the color unevenness. Such a solution to the problem of distortion of the resin body and the color unevenness is shown in Patent Document 3, which discloses the preamble of claims 1 and 4, and describes a dyeing method of fixing a dye on the surface of a transparent resin body. Wherein, the surface of the transparent resin body will be heated by irradiation from a laser beam, so that the surface of the resin body will soften up and take up the dye. The scanning part, controlled by the controller, allows for the laser beam to scan the surface of the transparent resin body and thus to fix the dye on the entire surface of the resin body. The laser beam and thus the irradiation condition are controlled by a controller. Since a problem of this dyeing technic is distortion of the resin body by temperature gradients inside the resin body, caused by the irradiation of the resin body, the controller changes the irradiation conditions according to the thickness of the transparent resin body. Thus, preventing distortion of the resin body and colour unevenness.

Patent Document 1 mentioned above is JP-A-2001-215306, and Patent Document 2 mentioned above is JP-A-2013-015824, and Patent Document 3 mentioned above is US-2018/0127918-A1.

Incidentally, in the related art, while performing the method of suppressing the color unevenness as described above, an irradiation position of the laser light is changed so that the irradiation of the laser light is completed once (cycle) on a two-dimensional region of the resin body. However, in a case where the irradiation of the laser light was completed by such a method in the related art, it took a predetermined time until the temperature raised at each irradiation position, respectively. Therefore, it was found that a temperature difference occurred between the position heated by the irradiation of the laser light at a stage where the irradiation of the laser light was started and the position heated by the irradiation of the laser light at a stage where the irradiation of the laser light was completed. That is, even when each irradiation position is heated to a desired temperature, the heat is then diffused inward and radiated to the outside, so that it was found that a temperature difference occurred between positions heated at different timings, and this effect caused color unevenness and distortion. In particular, in the method of completing the heating of the resin body by irradiating with the laser light once, it was found that a time difference was more likely to occur between the stage where the irradiation of the laser light was started and the stage where the irradiation of the laser light was completed, so that a temperature difference was likely to occur and the color unevenness and the distortion occurred.

### SUMMARY

An object of the present disclosure to provide a dyeing apparatus and a dyeing method, with using laser light, which enable to appropriately dye a resin body while suppressing distortion of the resin body.

In order to accomplish the above object, the present invention is provided with a dyeing apparatus for fixing a dye on a resin body according to independent claim 1 and a dyeing method of fixing a dye on a resin body according to independent claim 4.

### BRIEF DESCRIPTION OF DRAWINGS

FIG. 1 is a diagram illustrating a schematic configuration of a dyeing system used in a dyeing method with using laser light.
FIG. 2 is a diagram illustrating a schematic configuration of a dyeing apparatus that fixes a dye on a resin body in the dyeing system.
FIG. 3 is a diagram illustrating irradiation of the laser light.
FIG. 4 is a diagram illustrating an example of a two-dimensional temperature detection result by a thermo-camera after the irradiation of the laser light has been performed.

### DETAILED DESCRIPTION

### <Outline>

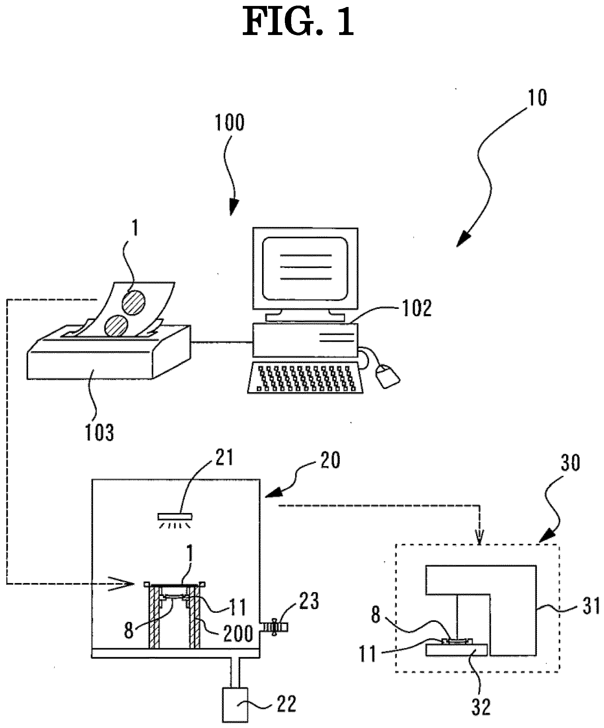

Hereinafter, one of typical embodiments of a dyeing apparatus capable of fixing a dye on a resin body by heating the resin body having a dye attached to a surface thereof will be described with reference to the drawings. FIGs. 1 to 4 are diagrams for describing the dyeing apparatus according to the present embodiment. The items classified by < > below may be used independently or in association with each other.

Hereinafter, description will be performed by exemplifying a case where a lens (for example, lens 8) that is one of the resin bodies is dyed using a gas phase transfer dyeing method to manufacture a dyed lens. A technique of the present disclosure can be applied to the lens regardless of a refractive power. For example, the technique of the present disclosure can be applied to lenses having various refractive powers (for example, low diopter, high diopter, 0 diopter, and the like). As a matter of course, the technique exemplified below can also be applied to the case where a resin body other than a lens (for example, any molded product such as goggles, a cover of mobile phone, a cover for light, accessories, a toy, a film (for example, thickness of 400 µm or less), a plate material (for example, thickness of 400 µm or more)) is dyed by using the gas phase transfer dyeing method. As a matter of course, the resin body also includes a member in which a resin is added to a member (for example, wood, glass, and the like). In this case, the resin may be dyed using the gas phase transfer dyeing method.

For example, as the resin body, a resin body made of at least one of materials (ingredients) such as a polycarbonate-based resin (for example, diethylene glycol bisallyl carbonate polymer (CR-39)), a polyurethane-based resin (trivex), an allyl-based resin (for example, allyl diglycol carbonate and its copolymer, diallyl phthalate and its copolymer), a fumaric acid-based resin (for example, benzyl fumarate copolymer), a styrene-based resin, polymethyl acrylate-based resin, a fiber-based resin (for example, cellulose propionate), high refractive materials such as thiourethane-based or thioepoxy, and a nylon-based resin (polyamide-based resin) may be used.

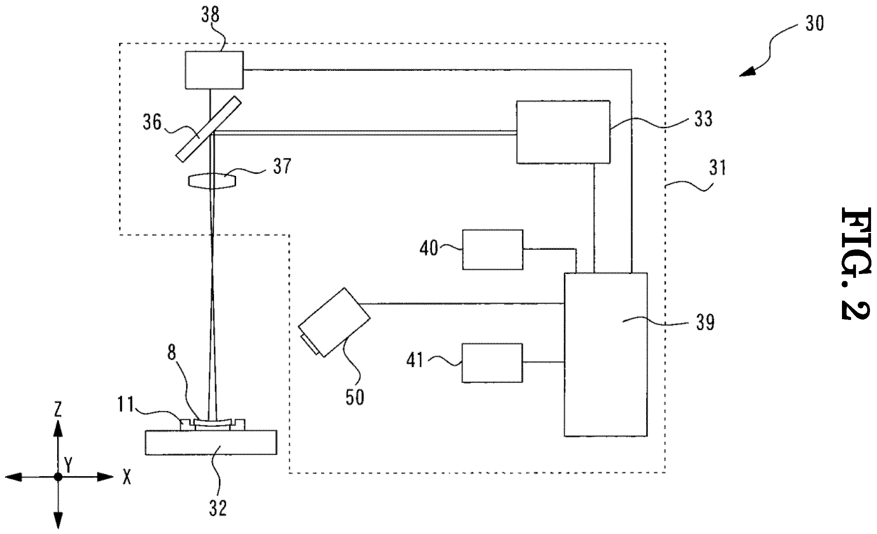

For example, FIG. 1 is a diagram illustrating a schematic configuration of a dyeing system used in a dyeing method with using laser light according to the present disclosure. In addition, for example, FIG. 2 is a diagram illustrating a schematic configuration of a dyeing apparatus that fixes a dye on a resin body in the dyeing system.

The dyeing system (for example, dyeing system 10) according to the present embodiment is provided with a dyeing substrate preparation apparatus (for example, dyeing substrate preparation apparatus 100), a vacuum gas phase transfer machine (for example, vacuum gas phase transfer machine 20), and a dyeing apparatus (for example, dyeing apparatus 30).

For example, the dyeing substrate preparation apparatus is used to attach a sublimable dye to be deposited on the resin body onto a dyeing substrate (for example, dyeing substrate 1) to prepare the dyeing substrate to which the dye is attached. For example, the vacuum gas phase transfer machine is used to deposit (transfer) the dye applied to the dyeing substrate and the sublimable dye onto the resin body which is an object to be dyed. For example, the dyeing apparatus is used for fixing the dye on the resin body by heating the resin body having the dye attached to the surface thereof. For example, the dyeing apparatus of the present disclosure irradiates the resin body to which the dye is attached with the laser light and heats the resin body to fix the dye on the resin body.

For example, in the present embodiment, the dyeing apparatus is provided with laser light irradiation means (for example, laser light source 33), scanning means (for example, optical scanner 36 and drive mechanism 38), and control means (for example, control unit 39).

For example, the laser light irradiation means emits laser light toward the resin body having the dye attached to the surface of the resin body. For example, the laser light irradiation means emits laser light having a predetermined wavelength. For example, the laser light irradiation means emits laser light having a wavelength in the infrared region. The laser light irradiation means is not limited to the laser light irradiation means for irradiating with the laser light having a wavelength in the infrared region. For example, the laser light irradiation means may emit laser light having a wavelength region which can be absorbed by a base material of the resin body. For example, the laser light irradiation means may emit laser light having a wavelength in the ultraviolet region (including near ultraviolet).

For example, it is also possible to heat the resin body by placing (applying, deposition) an absorber (for example, an infrared absorber, an ultraviolet absorber, and the like) that absorbs a specific wavelength region in addition to the dye on the resin body and absorbing the laser light in the absorber. In a case where the absorber is used, it is preferable that the dye and the absorber are laminated in this order on the resin body.

For example, the scanning means relatively scans the resin body with the laser light emitted from the laser light irradiation means. For example, as the scanning means, the resin body is relatively and two-dimensionally scanned with the laser light emitted from the laser light irradiation means. For example, two-dimensional scanning means two-dimensional scanning in a direction orthogonal to an optical axis irradiated with the laser light.

For example, as the scanning means, the resin body may be relatively scanned with the laser light by moving the resin body with respect to the laser light. In addition, for example, as the scanning means, the resin body may be relatively scanned with the laser light by scanning the resin body with the laser light. As a matter of course, for example, as the scanning means, the resin body may be relatively scanned with the laser light by combining both configurations of the movement of the resin body with respect to the laser light and the scanning of the resin body with the laser light.

For example, as the scanning means for moving the resin body with respect to the laser light, a moving stage (for example, stage 32) on which the resin body is placed may be moved. As an example, for example, the moving stage on which the resin body is placed may be randomly moved by drive means. The resin body may be directly placed on the moving stage. In addition, for example, a placing member (for example, the placing table 11) may be provided on the moving stage, and the resin body may be indirectly installed on the moving stage through the placing member. In addition, for example, as the scanning means for moving the resin body with respect to the laser light, holding means for holding the resin body may be moved. As an example, for example, the resin body may be held by the holding means, and the holding means may be randomly moved by the drive means.

For example, as the scanning means for scanning the resin body with the laser light, the laser light may be two-dimensionally scanned on the resin body by an optical scanner. As an example, for example, the optical scanner may be a galvanometer mirror, and the reflection angle thereof may be randomly adjusted by the drive means. As a result, a reflection (traveling) direction of the laser light emitted from the laser irradiation means is changed, the laser light is scanned at a predetermined position on the resin body, and an irradiation position of the laser light on the resin body is changed. The optical scanner is not limited to the galvanometer mirror. For example, the optical scanner may have a configuration that deflects the laser light. For example, the optical scanner may be at least one of a reflection mirror (galvanometer mirror, polygon mirror, and resonant scanner) and an acousto-optic element (AOM) that changes the traveling (deflection) direction of light.

For example, the control means controls the scanning means to change the irradiation position of the laser light on the resin body. In the present embodiment, for example, the control means controls the scanning means to heat the resin body having the dye attached to the surface thereof by repeatedly irradiating the two-dimensional region on the resin body with the laser light a plurality of times (a plurality of cycles), for fixing the dye on the resin body. That is, for example, the control means controls the scanning means to heat the resin body having the dye attached to the surface thereof by repeatedly irradiating the two-dimensional region, which is the surface to be dyed, on the resin body with the laser light a plurality of times, for fixing the dye on the resin body. As described above, for example, in the dyeing apparatus according to the present embodiment, since the entire two-dimensional region is heated repeatedly, it is possible to suppress variations in the heating temperature on the resin body and it is possible to perform dyeing while suppressing color unevenness.

For example, in a case where it is repeatedly irradiated with the laser light a plurality of times, the same irradiation position irradiated in the previous cycle may be repeatedly irradiated with the laser light. By repeatedly irradiating the same position, heating can be performed more efficiently while suppressing temperature unevenness. In the present disclosure, the same irradiation position includes substantially the same irradiation position.

For example, in a case where the two-dimensional region (surface to be dyed) on the resin body is repeatedly irradiated a plurality of times, the two-dimensional region may be repeatedly irradiated with the laser light a plurality of times under the same irradiation condition. In this case, for example, the control means may control to heat the resin body having the dye attached to the surface thereof by repeatedly irradiating the two-dimensional region on the resin body with the laser light a plurality of times under the same irradiation condition, for fixing the dye on the resin body. That is, for example, the control means may repeatedly irradiate the laser light a plurality of times without changing the irradiation condition of the laser light for each time (each cycle). For example, the two-dimensional region on the resin body means a two-dimensional region in a direction orthogonal to the optical axis irradiated with the laser light.

In addition, for example, in a case where the two-dimensional region on the resin body is repeatedly irradiated with the laser light a plurality of times, the two-dimensional region may be repeatedly irradiated with the laser light a plurality of times while changing the irradiation condition of the laser light. In this case, for example, the control means may control to heat the resin body having the dye attached to the surface thereof by repeatedly irradiating the two-dimensional region on the resin body with the laser light a plurality of times while changing the irradiation condition of the laser light, for fixing the dye on the resin body. With such a configuration, for example, since it is possible to irradiate with the laser light considering the state of the resin body such as high and low temperature (temperature is high, temperature is low, and the like), easiness of temperature change (temperature is easy to change, temperature is hard to change, and the like), it is possible to further suppress variations in heating temperature on the resin body. As a result, it is possible to easily perform dyeing while suppressing the color unevenness.

For example, the change of the irradiation condition may be a change of at least one of conditions such as output condition (irradiation output), scanning speed (irradiation speed), scanning pattern (irradiation pattern), and scanning position (irradiation position). As a matter of course, the irradiation condition different from the above may be changed. For example, changing the irradiation condition may be a configuration that changes the irradiation state of the laser light. In each irradiation condition (for example, output condition, scanning speed, scanning pattern, scanning position, and the like) included in the irradiation conditions, a plurality of irradiation conditions among the irradiation conditions may be associated in advance and stored in storage means (for example, memory 41). As an example, for example, the output condition included in the irradiation condition and the scanning position may be associated in advance and stored in the storage means.

For example, as a change of the output condition (irradiation output), the output of the laser light source may be controlled by the control means to adjust the output of the laser light. In addition, for example, as the change of the output condition, a member for adjusting the output of the laser light may be provided in the optical path through which the resin body is irradiated with the laser light. For example, the member may be a light amount adjustment filter or an optical attenuator. As a matter of course, the change of the output condition is not limited to the above configuration. For example, the output condition of the laser light may be changed as long as the output state of the laser light when the resin body is irradiated with the laser light is changed.

For example, the scanning pattern (irradiation pattern) may be a scanning pattern for one-dimensional irradiation. In this case, for example, the scanning pattern may be a line scan, a circle scan, or the like. In addition, for example, the scanning pattern may be an irradiation pattern for two-dimensional irradiation. In this case, for example, the scanning pattern may be a spiral scan (spiral scanning pattern), a cross scan, a map scan, a multi-scan, a radial scan, or the like. As a matter of course, the irradiation of the laser light may be performed in a scanning pattern different from the above.

For example, the scanning position (irradiation position) may be changed by at least one of changing the width (interval) between the irradiation positions, shifting the irradiation positions, and irradiating only a specific position. As an example, for example, in a case where the irradiation position is shifted, the irradiation may be performed by shifting the irradiation position of the laser light to the two-dimensional region on the resin body. In this case, for example, in a case where it is repeatedly irradiated with the laser light a plurality of times, an irradiation position different from the irradiation position irradiated in the previous cycle may be repeatedly irradiated with the laser light. As a matter of course, the scanning position different from the above may be changed.

For example, the timing to change the irradiation condition of the laser light may be performed at any timing. For example, in a case of changing the irradiation condition of the laser light, the control means may perform the irradiation of the laser light while changing the irradiation condition of the laser light from the first (first cycle) irradiation of the laser light. In addition, for example, in a case of changing the irradiation condition of the laser light, the control means may perform the irradiation of the laser light while changing the irradiation condition of the laser light from at least the second (second cycle) and subsequent irradiation of the laser light. In this case, for example, the control means may perform the irradiation of the laser light while changing the irradiation condition of the laser light from the first irradiation of the laser light. In addition, in this case, for example, the control means may irradiate with the laser light while changing the irradiation condition of the laser light in the second and subsequent irradiation of the laser light, without changing the irradiation condition of the laser light in the first irradiation of the laser light with respect to the two-dimensional region of the resin body. As a matter of course, it may be irradiated with the laser light only at a predetermined time (cycle) while appropriately changing the irradiation condition of the laser light.

For example, the laser irradiation condition may be changed based on lens information. For example, the lens information may be any information on a lens material, a lens type, an optical characteristic of the lens, a dyeing concentration, a lens power, a dyeing pattern, and the like. As a matter of course, lens information different from the above may be used.

According to the invention, the irradiation condition of the laser light may be changed based on temperature detection means (for example, thermo-camera 50). The dyeing apparatus includes the temperature detection means that detects the temperature of the resin body. The control means controls to heat the resin body having the dye attached to the surface thereof by repeatedly irradiating the two-dimensional region on the resin body with the laser light a plurality of times while changing the irradiation condition of the laser light based on the detection result of the temperature detection means, for fixing the dye on the resin body. As an example, for example, the control means may set the irradiation condition at each irradiation position of the laser light based on the detection result of the temperature detection means. Next, the control means may change the irradiation condition of the laser light so that the irradiation condition is set. With such a configuration, for example, even in a case where the temperature on the resin body is not the expected temperature during the irradiation of the laser light, since the irradiation of the laser light can be performed while grasping the actual temperature state, the irradiation of the laser light can be performed according to the temperature change. As a result, since it is possible to further suppress variations in temperature on the resin body, it is possible to perform dyeing of the resin body with further suppressed color unevenness.

For example, the temperature detection means may be configured to detect (measure) the heating temperature of the irradiation position of the laser light in a non-contact manner. As an example, for example, as the temperature detection means, a radiation thermometer that measures the temperature of the object by measuring the intensity of infrared rays or visible rays from the object can be preferably used. As a matter of course, the configuration is not limited to the above as long as the temperature on the resin body can be detected.

For example, the temperature detection means can be installed at any position. As an example, for example, the temperature detection means may be installed so that the temperature on the resin body can be detected obliquely from above. In addition, as an example, for example, a measurement axis of the temperature detection means and an optical axis of the laser light irradiation means may be installed coaxially. As a matter of course, the temperature detection means may be installed at a position different from the above.

For example, the temperature detection means may be configured to detect the temperature of only a specific position on the resin body. As an example, for example, the temperature detection means may detect the temperature at the position being irradiated with the laser light. In this case, for example, the temperature detection means detects the temperature at the position being irradiated with the laser light, whereas the control means may control to irradiate with the laser light so that the temperature at the irradiation position of the laser light is a desired temperature. In addition, as an example, for example, the temperature detection means may detect the temperature at the position where the irradiation of the laser light has been performed. In this case, for example, the temperature detection means detects the temperature at the position where the irradiation of the laser light has been performed, and thereafter the control means may irradiate with the laser light while referring to the temperature condition.

According to the invention, the temperature detection means is configured to detect the temperature of a two-dimensional region on the resin body, that is, the temperature detection means is configured to detect the temperature of the resin body two-dimensionally. In this case, for example, the temperature detection means detects the temperature on the resin body at least at a position not irradiated with the laser light. As a matter of course, for example, the temperature detection means may detect the temperature on the resin body at a position not irradiated with the laser light and a position irradiated with the laser light. For example, the position not irradiated with the laser light may be a position where the irradiation of the laser light is not performed or a position where the irradiation of the laser light has been performed. For example, since it is possible to change the irradiation condition while grasping the temperature distribution of the entire resin body by detecting the temperature two-dimensionally, more appropriate irradiation conditions can be set and color unevenness can be suppressed. In addition, for example, in a case where the resin body is heated by irradiation of the laser light, the temperature may rise after a time lag since the irradiation of the laser light has been performed. By detecting the temperature two-dimensionally, since it is possible to capture the temperature change after the irradiation with the laser light has been performed, and it is possible to change the irradiation condition while grasping the temperature distribution of the entire resin body, more appropriate irradiation conditions can be set and color unevenness can be suppressed.

For example, in the case of a configuration in which the temperature of the resin body is two-dimensionally detected and the irradiation condition of the laser light is changed, the control means may change the irradiation condition of the laser light so that the preset heating temperature and the two-dimensionally detected heating temperature are substantially the same as each other. In addition, for example, the control means may analyze the detection result detected two-dimensionally on the resin body, and sequentially change the irradiation conditions of the laser light so that the temperature difference between the irradiation positions of the laser light does not exceed a predetermined threshold value. The predetermined threshold value can be obtained in advance by experiments or simulations.

In the case of a configuration in which the temperature of the resin body is two-dimensionally detected and the irradiation condition of the laser light is changed, for example, it is more preferable that the control means changes the irradiation condition of the laser light so that the temperature of each irradiation position of the laser light on the resin body rises as uniformly as possible toward the target temperature (desired temperature). In the present embodiment, since the temperature of the resin body can be detected two-dimensionally, it is possible to set the irradiation condition of the laser lights in consideration of the temperature of the entire two-dimensional region of the resin body. For example, the control means may change the irradiation condition at each irradiation position of the laser light based on the detected two-dimensional temperature detection result (two-dimensional temperature distribution) so that the temperature of the resin body rises uniformly toward the target temperature. As a matter of course, the configuration of detecting the temperature of the resin body two-dimensionally and changing the irradiation condition of the laser light is not limited to the above configuration.

For example, as a configuration for detecting the temperature of the two-dimensional region on the resin body, the temperature detection means may include at least a thermo-camera. For example, by using the thermo-camera, it is easy to detect a temperature change secondarily. In addition, for example, as a configuration for detecting the temperature of the two-dimensional region on the resin body, a configuration in which a plurality of temperature detection means are provided may be used. As a matter of course, the configuration for detecting the temperature of the two-dimensional region on the resin body is not limited to the above.

For example, in a case where the irradiation condition of the laser light is changed based on the detection result of the temperature detection means, the temperature detection means may perform the temperature detection at any timing. For example, the detection may be performed each time the irradiation of the laser light a predetermined number of times (for example, once, twice, and the like) is completed. In addition, for example, the detection may be sequentially performed in real time. As a matter of course, the timing of temperature detection by the temperature detection means is not limited to the above configuration.

For example, in a case where the irradiation condition of the laser light is set based on the detection result of the temperature detection means, the irradiation condition of the laser light may be set based on a predetermined detection result. For example, the irradiation condition of the laser light may be set based on the detection result of the temperature detected before the predetermined cycle (for example, once before or twice before). In addition, for example, the setting of the irradiation condition may be changed (updated) based on the detection result sequentially detected in real time. As a matter of course, the setting of the irradiation condition of the laser light based on the detection result of the temperature detection means is not limited to the above configuration.

For example, in a case of changing the irradiation condition of the laser light based on the detection result of the temperature detection means, the control means may perform the irradiation of the laser light while changing the irradiation condition of the laser light from the first (first cycle) irradiation of the laser light.

In addition, for example, in a case of changing the irradiation condition of the laser light based on the detection result of the temperature detection means, the control means may perform the irradiation of the laser light while changing the irradiation condition of the laser light from at least the second (second cycle) and subsequent irradiation of the laser light. In this case, for example, the control means may perform the irradiation of the laser light while changing the irradiation condition of the laser light from the first irradiation of the laser light. In addition, in this case, for example, the control means may irradiate the two-dimensional region of the resin body with the laser light in the second and subsequent irradiation of the laser light while changing the irradiation condition of the laser light based on the detection result of the temperature detection means. As described above, for example, it is possible to detect the temperature change state of the resin body after the first irradiation of the laser light under the same irradiation condition has been performed, and to set the irradiation condition of the laser light in the second and subsequent irradiation. Therefore, it is possible to detect the characteristic of the temperature change for each resin body, and it is possible to set the irradiation condition of the laser light according to the characteristic. As a result, it is possible to perform dyeing while suppressing color unevenness.

For example, the control means for changing the irradiation condition of the laser light and the control means for controlling the scanning means may be separately provided. As a matter of course, the control means for changing the irradiation condition of the laser light and the control means for controlling the scanning means may be combined.

### <Example>

Hereinafter, the configuration of the dyeing apparatus according to the present example will be described. For example, FIG. 1 is a diagram illustrating a schematic configuration of a dyeing system used in a dyeing method with using laser light according to the present disclosure. In the present example, a case where a lens is used as a resin body to be dyed will be described as an example.

The dyeing system 10 according to the present example is provided with a dyeing substrate preparation apparatus 100, a vacuum gas phase transfer machine 20, and a dyeing apparatus 30. For example, the dyeing substrate preparation apparatus 100 is used to attach a sublimable dye deposited on the lens 8 to the dyeing substrate 1 to prepare the dyeing substrate 1 to which the dye is attached. For example, the vacuum gas phase transfer machine 20 is used to deposit (transfer) the sublimable dye onto the lens 8 which is an object to be dyed with the dye applied to the dyeing substrate 1. For example, the dyeing apparatus 30 is used to irradiate the lens 8 having the dye attached thereto with the laser light for dyeing.

### <Dyeing Substrate Preparation Apparatus>

For example, the dyeing substrate preparation apparatus 100 forms a dye layer by attaching a sublimable dye, which is subsequently deposited on the lens 8, to the dyeing substrate 1. The dyeing substrate 1 is a medium that temporarily holds a dye used for dyeing the lens 8.

As an example, the dyeing substrate preparation apparatus 100 according to the present example attaches (prints in the present embodiment) a liquid ink containing a sublimable dye to the dyeing substrate 1 using the ink jet printer 103. Therefore, the dyeing substrate preparation apparatus 100 can more accurately attach the dye having the shade desired by the operator to the dyeing substrate 1. That is, the accuracy of the amount of the dye attached to the dyeing substrate 1, the hue, the degree of gradation, and the like is improved. In addition, the operator can easily handle the dye. Furthermore, by using the ink jet printer 103, the amount of dye used can be reduced. In the present embodiment, a step of drying the ink printed by the ink jet printer 103 is performed. In the present embodiment, the method of printing the dye is described by taking the configuration using the ink jet printer as an example, and the method is not limited thereto. The dye may be attached to the dyeing substrate by printing using a laser printer. In this case, the dye is attached to the dyeing substrate by a laser printer using, for example, a sublimable toner.

For example, the dyeing substrate 1 is formed by applying (outputting) dyeing ink in a predetermined shape on a medium such as paper which can be used in the ink jet printer 103. In addition, in order to increase the heat absorption efficiency of the dyeing substrate 1, a substrate in which the entire area of the rear surface (surface on which printing is not performed) is black is used.

In the present example, print data used for driving control of the ink jet printer 103 is created by a personal computer (hereinafter, referred to as "PC") 102. The operator can easily adjust the hue, saturation, lightness, presence and absence of gradation, and the like of the dye (ink) attached to the dyeing substrate 1 by using, for example, the draw software installed in the PC 102. By storing print data on the memory of the PC 102, the memory of the ink jet printer 103, the USB memory, or the like, the operator can repeatedly attach the ink to a plurality of dyeing substrates 1 with the same shade. In addition, the operator can select one of a plurality of print data created in advance by the manufacturer or the like and cause the ink jet printer 103 to execute printing.

It is also possible to attach the dye to the dyeing substrate 1 without using the ink jet printer 103. For example, a dye attachment unit 10 may attach ink to the dyeing substrate 1 by driving a dispenser (liquid quantitative application device), a roller, or the like. It is also possible to use screen printing, offset printing, gravure printing, flexographic printing, and the like. In addition, instead of using the dyeing substrate preparation apparatus 100, the operator himself may attach the ink to the dyeing substrate 1 by using a brush or a roller.

In addition, in the present example, at least three color dyes of red, blue, and yellow are attached to the dyeing substrate 1 by the ink jet printer 103. The dye is required to be sublimable and be capable of withstanding the heat of sublimation. As an example, in the present embodiment, a quinophthalone-based sublimable dye or an anthraquinonebased sublimable dye is used.

### <Vacuum Gas Phase Transfer Machine>

For example, the vacuum gas phase transfer machine 20 heats the dye attached to the dyeing substrate 1 with an electromagnetic wave to sublimate the dye toward the lens 8. As a result, the dye is deposited on the lens 8. The lens 8 may be formed with various layers such as a receiving film for facilitating the fixing of the dye in the fixing step described later. The vacuum gas phase transfer machine 20 according to the present embodiment is provided with an electromagnetic wave generating unit 21, a pump 22, a valve 23, and a dyeing jig 200. For example, the vacuum gas phase transfer machine 20 is provided with an opening and closing door (not illustrated) for taking in and out the lens 8 and the dyeing substrate 1 described above.

For example, in the present example, the electromagnetic wave generating unit 21 uses a halogen lamp that generates infrared rays. However, the electromagnetic wave generating unit 21 is not limited thereto as long as the device can heat the dyeing substrate 1. For example, instead of the halogen lamp, a configuration that generates electromagnetic waves of other wavelengths such as ultraviolet rays and microwaves may be used.

For example, the electromagnetic wave generating unit 21 can raise the temperature of the dye in a short time by irradiating the dyeing substrate 1 with the electromagnetic wave. In addition, in a case of sublimating the dye of the dyeing substrate 1, it is also conceivable to heat the dye by bringing an iron plate which is high in temperature into contact with the dyeing substrate 1. However, it is difficult to bring the dyeing substrate 1 into uniform contact with the iron plate or the like (for example, without a gap). When the contact state is not uniform, the dye may not be uniformly heated and color unevenness may occur. On the other hand, the vacuum gas phase transfer machine 20 according to the present embodiment can uniformly heat the dye by the electromagnetic wave from the electromagnetic wave generating unit 21 separated from the dyeing substrate 1.

For example, the dyeing jig 200 holds the placing table 11 on which the dyeing substrate 1 and the lens 8 are disposed. For example, the dyeing jig 200 holds the lens 8 (surface to be dyed) disposed on the placing table 11 and the dyeing substrate 1 (ink application surface) so as to face each other in a non-contact manner. That is, the dyeing substrate 1 is disposed so that the surface to which the dye is attached faces the lens 8. When the distance between a dye-attached surface of the dyeing substrate 1 and the lens 8 is too small, the dye is not sublimated sufficiently, and color unevenness or the like tends to occur. The dyeing substrate 1 and the lens 8 may come into contact with each other to cause color unevenness or the like. In addition, when the distance between the dye-attached surface of the dyeing substrate 1 and the lens 8 is too wide, the sublimated dye may be concentrated again and color unevenness may occur, and the concentration of the deposited dye is thin. Therefore, it is desirable to set the distance between the dyeing substrate 1 and the lens 8 to an appropriate distance (for example, 2 mm to 30 mm).

For example, the pump 22 discharges the gas inside the vacuum gas phase transfer machine 20 to the outside, and lowers the atmospheric pressure inside the vacuum gas phase transfer machine 20. For example, the atmospheric pressure inside the vacuum gas phase transfer machine 20 at the time of deposition may be 30 Pa to 10 KPa, and more desirably approximately 50 Pa to 500 Pa. That is, for example, the pump 22 can be used to cause the inside of the vacuum gas phase transfer machine 20 substantially vacuum. For example, the valve 23 switches between opening and closing of the internal space of the vacuum gas phase transfer machine 20. That is, for example, by opening the valve 23, the valve 23 can be used when the outside air is put into the vacuum gas phase transfer machine 20 that is made into a substantially vacuum state by the pump 22 and is returned to the atmospheric pressure.

### <Dyeing Apparatus>

For example, the dyeing apparatus 30 is used for fixing the dye and developing the color by irradiating the lens 8 having the sublimable dye with laser light and heating the lens 8 at a predetermined temperature in the vacuum gas phase transfer machine 20. For example, FIG. 2 is a diagram illustrating a schematic configuration of the dyeing apparatus for fixing the dye on the resin body in the dyeing system. In the present embodiment, a left and right direction (horizontal direction) of the dyeing apparatus 30 on a paper surface of FIG. 2 will be described as an X direction, a depth direction (front and rear direction) of the dyeing apparatus 30 on the paper surface of FIG. 2 will be described as a Y direction, and a vertical direction (longitudinal direction) of the dyeing apparatus 30 on the paper surface of FIG. 2 will be described as a Z direction.

For example, the dyeing apparatus 30 is provided with an apparatus main body 31 that emits the laser light, and a stage 32. The apparatus main body 31 includes the stage 32, a laser light source 33, an optical scanner 36, a lens 37, a drive mechanism 38, a control unit 39, an operation controller 40, a memory 41, a thermo-camera 50 and the like.

For example, the laser light source 33 emits laser light having a predetermined wavelength. In the present example, for example, the laser light source 33 emits laser light having a wavelength in the infrared region. For example, in the present example, the laser light source 33 emits CO2 laser light having a wavelength of 10.2 to 10.8 µm corresponding to the infrared rays. The sublimable dye hardly absorbs light of this wavelength. In the present example, a material having a high refractive index such as thiourethane or thioepoxy is used as the material of the lens 8. The material of the lens 8 used in the present example absorbs a wavelength of 10.2 to 10.8 µm by approximately 50% to 100%. Since the CO2 laser light is unlikely to be absorbed by the dye and is absorbed by the lens 8, only the surface of the lens 8 is heated to loosen the molecular structure of the polymer of the resin, and the sublimable disperse dye is diffused in the portion where the molecular structure of the polymer is loose. Therefore, the disperse dye can be fixed on the surface of the lens 8.

For example, the laser light source 33 is not limited thereto. In the present example, for example, the laser light source 33 can be used as long as the laser light source 33 emits the laser light having a wavelength in the infrared region or a wavelength in the ultraviolet region (including near ultraviolet) which can be absorbed by the base material of the resin body (lens in the present embodiment).

For example, the laser light emitted from the laser light source 33 is bent by the optical scanner 36 and thereafter passes through the lens 37 to be condensed. For example, in the present embodiment, the laser light source 33 emits laser light having a beam diameter of approximately 2.0 mm. In the present embodiment, after passing through the lens 37, the surface of the lens 8 is defocused to have a diameter of approximately 10 mm to 35 mm. For example, the beam diameter of the laser light on the lens due to defocusing is not limited thereto, and may be appropriately determined in consideration of productivity and irradiation energy. For example, the spot diameter of the laser light on the lens 8 is preferably approximately 5 mm or more and 50 mm or less, and more preferably approximately 10 mm or more and 40 mm or less. In addition, it is also possible to form the laser light in a line shape by using a cylindrical lens or the like.

For example, the optical scanner 36 two-dimensionally scans the laser light on the lens 8 (XY directions). In the present example, for example, the optical scanner 36 is two galvanometer mirrors, and the reflection angle and scanning speed thereof are randomly adjusted by the drive mechanism 38. For example, the adjustment of the reflection angle of the galvanometer mirror is adjusted by the movement amount and the movement direction. For example, it is moved by the drive of the drive mechanism 38, and the reflection angle and scanning speed are constantly detected by detection means (not illustrated). For example, the drive control of the drive mechanism 38 is performed by the control unit 39, and the control information (reflection angle and scanning speed) is set by the operation controller (condition setting unit) 40 provided with switches (not illustrated). With such a configuration, the reflection (traveling) angle of the laser light emitted from the laser light source 33 is changed, and the laser light is scanned on the lens 8 at a predetermined position. As a result, the irradiation position of the laser light on the lens 8 is changed. The optical scanner 36 may have any configuration as long as the optical scanner 36 deflects light. For example, in addition to a reflection mirror (galvanometer mirror, polygon mirror, resonant scanner), an acousto-optical element (AOM) that changes the traveling (deflection) direction of a beam is used.

For example, the stage 32 is installed at the irradiation destination of the defocused laser light. For example, the placing table 11 is fixedly placed on the stage 32, and the lens 8 on which the sublimable dye is deposited is placed with the deposition surface (surface to be dyed) facing upward.

The dyeing apparatus 30 illustrated in FIG. 2 is provided with the thermo-camera 50 serving as the temperature detection means for detecting (measuring) the heating temperature (lens surface temperature) of the irradiation position of the laser light on the lens 8 in a non-contact manner. For example, by using the thermo-camera 50, the temperature of the lens 8 can be detected two-dimensionally. That is, the two-dimensional temperature distribution of the lens 8 can be detected.

For example, the thermo-camera 50 is installed so that the irradiation position (heating portion) of the laser light on the lens 8 can be detected obliquely from above. More preferably, the thermo-camera 50 may be installed so that the measurement axis of the thermo-camera 50 and the optical axis of the laser light intersect at a predetermined angle, and the height position of the lens 8 may be set so that this intersection is located on the lens 8.

For example, the thermo-camera 50 is connected to the control unit 39, and the detection result of the heating temperature by the thermo-camera 50 is transmitted to the control unit 39. The laser irradiation condition is appropriately changed for each irradiation position of the laser light on the lens 8 to control the output of the laser light emitted from the laser light source 33 so that the control unit 39 can maintain the preset heating temperature within a predetermined range based on the received detection result of the heating temperature. The setting of the target heating temperature at each irradiation position of the laser light is set in advance using the operation controller 40. For example, the heating temperature is set to a heating temperature that allows the dye to be fixed on the lens 8 in consideration of the material of the transparent resin body (lens here) which is the object to be dyed. Although the heating temperature is set depending on the resin material, the heating temperature is set at a heating temperature necessary for fixing the dye and at which re-sublimation of the dye hardly occurs. Such heating temperature is preferably in the range of 100°C to 200°C, and more preferably 110°C to 180°C. Although a portion of the dye attached to the lens 8 may be sublimated depending on the set heating temperature, since the substantially same heating temperature can be maintained over the entire region of the surface to be dyed of the lens, the sublimation of the dye is substantially the same regardless of the irradiation position of the lens, and the occurrence of color unevenness is suppressed.

In addition, the control unit 39 drives the optical scanner 36 so that the time necessary for fixing the dye on the lens 10 is sufficiently assigned depending on the heating temperature set at the laser irradiation position of the lens 8. The relative scanning speed of the laser light by the optical scanner 36 may be fixed regardless of the set heating temperature, or may be set in association with the set heating temperature. For example, a plurality of pieces of information on laser irradiation conditions for setting different heating temperatures and scanning speeds according to various resin materials can be stored in the memory 41 in advance. By specifying the type of lens (resin material, lens shape, dyeing concentration, dyeing pattern, lens power, and the like) through the operation controller 40, the corresponding laser irradiation conditions (for example, heating temperature and scanning speed) can be called from the memory 41 and set.

In the present example, the output of the laser light emitted from the laser light source 33 is adjusted so that the set heating temperature can be maintained within a predetermined range, and the present invention is not limited thereto. For example, the output of the laser light may be kept constant, and the set heating temperature may be maintained by changing other laser irradiation conditions such as changing the defocus state of the laser light on the lens 8 by using an optical member or emitting the laser light in pulses.

In a case where the reflected light (scattered light) of the laser light is incident on the thermo-camera 50 and affects the detection result, a filter that cuts the wavelength of the laser light and transmits other wavelengths may be installed in front of the thermo-camera 50.

In the present example, the configuration in which the irradiation condition of the laser light is changed by using the temperature detection means (thermo-camera 50 in the present example) is described as an example, and the present invention is not limited thereto. Irradiation of the laser light may be performed while changing the irradiation condition of the laser light without using the temperature detection means. In this case, for example, the irradiation condition of the laser light may be changed based on the lens information.

The change of the irradiation condition of the laser light based on the lens information will be described in more detail. For example, lens information and laser irradiation conditions (for example, output conditions based on scanning positions, scanning speed conditions, scanning patterns, and the like) necessary for suitable dyeing are stored in advance in association with each other in the memory 41. For example, the lens information may be at least one of a lens material, a lens type (for example, plus lens, minus lens, and the like), color information (dyeing concentration, dyeing pattern), and lens optical characteristics (for example, spherical power, cylindrical power, axial angle, and the like). For example, associating the laser irradiation conditions with the lens information may be set by calculating laser irradiation conditions that are unlikely to cause color unevenness or yellowing, and that allow good dyeing, through simulations or experiments.

For example, in a case where the lens 8 is dyed using the dyeing apparatus 30, the type (lens information) of the plastic lens to be dyed is input using the operation controller 40. For example, the control unit 39 calls the setting information (irradiation condition of the laser light) corresponding to the input lens information from the storage unit 41, and controls the laser light source 33 and the drive mechanism 38 based on the called setting information.

In the present example, the configuration in which the laser light is scanned by the optical scanner 36 is described as an example, and the present invention is not limited thereto. For example, the surface to be dyed may be scanned with the laser light by moving the lens 8 side. In this case, for example, the stage 32 may be movable, and the lens 8 side may be moved by moving the stage 32. As a matter of course, both the structure for scanning with the laser light and the structure for moving the lens 8 side may be used to scan the lens 8 with the laser light.

### <Dyeing Method>

Hereinafter, a series of flow of the dyeing method of the lens 8 will be described. The lens 8 used in the present example is a meniscus lens having a negative power, and the thickness near the center is thinner than the thickness around the lens.

For example, as illustrated in FIG. 2, the lens 8 is placed on the placing table 11 with the surface on which the sublimable dye is attached facing upward, with the sublimable dye uniformly attached to the surface thereof. The surface of the lens 8 on which the sublimable dye is attached is irradiated with the laser light. In the present example, for example, since the laser light has a high power, the laser light is once focused through the lens 37 and thereafter defocused on the surface of the lens 8. As a result, the irradiated spot light has a spread and the light density is weakened. In addition, the drive position of the optical scanner 36 by the drive mechanism 38 is normally known to the control unit 39 by using detection means (not illustrated), and the irradiation position of the laser light on the lens 8 having a known size placed on the placing table 11 can be detected.

There is a possibility that the lens is deformed by heating the lens with the laser light and the lens surface is distorted. It is considered that such distortion is caused by a difference (temperature difference) in heat removal (heat dissipation) near the surface caused by a difference in lens thickness with respect to each region of the lens surface. For example, even when the heating control of the laser light is performed so as to keep the heating temperature of the lens surface constant in order to suppress color unevenness, the temperature change in each region of the lens surface after heating (after laser light scanning) varies depending on the thickness of the lens corresponding to each region.

For example, there is a difference in the rate of temperature decrease after heating between a portion (region) where the thickness of the lens is thin and a portion (region) where the thickness of the lens is thick. Therefore, in the case of a lens in which the thickness of the peripheral region of the lens and the thickness of the region near the center are different, the temperature difference on the lens is further increased and distortion is likely to occur. In the case where the thickness of the lens is uniform, a temperature difference occurs within the lens, and the temperature difference is considered to be small.

Therefore, in a case of heating is performed while relatively scanning the lens with the laser light and changing the heated portion (region) on the lens surface over time, it is necessary to scan with the laser light so that the difference between the temperature of a certain portion of the lens surface where is heated and the temperature of another portion where is heated up to immediately before and is started to remove heat is small.

In the present example, a spiral scan (spiral scanning pattern) is set as the scanning pattern. That is, for example, when it is irradiated with the laser light in the present example, the control unit 39 relatively scans the lens 8 with the laser light in a spiral manner. For example, the control unit 39 drives the drive mechanism 38 and controls the optical scanner 36 to scan the lens 8 with the laser light in a spiral manner.

For example, in the present example, the temperature on the lens 8 is two-dimensionally detected by the thermo-camera 50. For example, the control unit 39 appropriately changes the laser irradiation condition based on the detected two-dimensional temperature distribution so that the preset heating temperature can be maintained within a predetermined range, and controls the output of the laser light emitted from the laser light source 33. The setting of the target heating temperature at each irradiation position of the laser light is set using the operation controller 40.

For example, in the present example, the control unit 39 heats the lens 8 having the dye attached to the surface thereof by repeatedly irradiating the two-dimensional region on the lens 8 with the laser light a plurality of times to fix the dye to the lens 8. For example, the control unit 39 irradiates the two-dimensional region of the lens 8 with the laser light while changing the irradiation condition of the laser light based on the detection result of the thermo-camera 50 in the second and subsequent irradiation of the laser light. That is, for example, the control unit 39 first performs the first (first cycle) irradiation (pre-irradiation) with the laser light under the same irradiation condition, without changing the irradiation condition of the laser light on the surface to be dyed as the two-dimensional region of the lens 8. For example, pre-irradiation of the laser light is performed on the entire region of the surface to be dyed. For example, the control unit 39 irradiates the surface to be dyed with the laser light in the subsequent cycles (second cycle and thereafter) while changing the irradiation condition of the laser light based on the detection result of the thermo-camera 50.

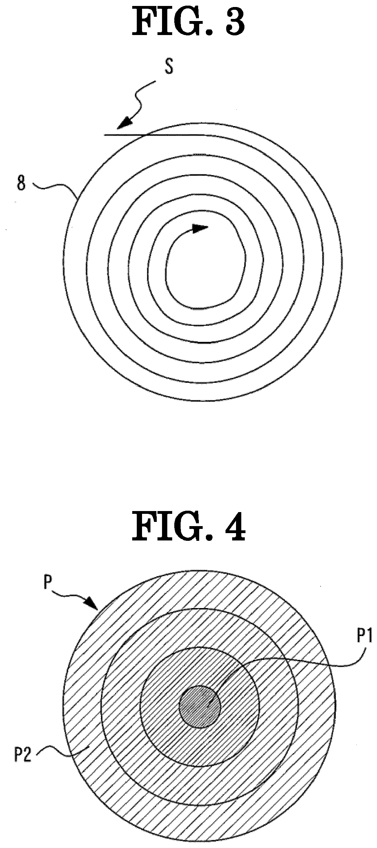

This will be described in more detail. FIG. 3 is a diagram illustrating irradiation of the laser light. As illustrated in FIG. 3, for example, the control unit 39 controls the optical scanner 36 along a spiral scanning pattern S and irradiates the surface to be dyed of the lens 8 (entire region in the present example) with the laser light while controlling the laser light in the XY directions.

In the present example, the same scanning region (irradiation region) is repeatedly scanned with the laser light as a two-dimensional region in a plurality of repeated irradiations. For example, the control unit 39 irradiates the same scanning region with the laser light a plurality of times using the optical scanner 36. As a matter of course, the same scanning region is not required to be completely the same scanning region, and may be a region scanned on substantially the same scanning region.

For example, when the first irradiation of the laser light is completed, the control unit 39 performs the second irradiation of the laser light in the same scanning region as the first scanning. For example, the control unit 39 irradiates with the laser light along the scanning pattern S illustrated in FIG. 3 and thereafter irradiates with the laser light again.

For example, the control unit 39 detects the temperature two-dimensionally at a predetermined timing by the thermo-camera 50 during the first irradiation. The predetermined timing can be randomly set. For example, the thermo-camera 50 may sequentially detect the temperature of the lens 8 in real time, or may detect the temperature of the lens 8 at the timing when the irradiation of the laser light is completed each time (each cycle). For example, the control unit 39 performs the irradiation of the laser light along the scanning pattern S while changing the irradiation condition of the laser light based on the detection result detected by the thermo-camera 50 during the second and subsequent irradiation of the laser light. In the present example, in the first irradiation (pre-irradiation) with the laser light, the irradiation of the laser light is performed without changing the irradiation condition.

In the present example, the configuration in which the pre-irradiation is performed once is described as an example, and the present invention is not limited thereto. For example, the pre-irradiation may be performed any number of times. As an example, for example, the control unit 39 may perform pre-irradiation 20 times under the same irradiation condition.

For example, the laser light emitted from the laser light source 33 is condensed by the lens 37, and thereafter the lens 8 is irradiated with the laser light in a defocused state. When a portion of the lens 8 is heated by the laser light, infrared rays are generated. For example, the thermo-camera 50 detects the intensity of infrared rays having a specific wavelength at the irradiation position of the laser light occurring on the lens 8 and detects the heating temperature.

For example, the detection result of the thermo-camera 50 is transmitted to the control unit 39. The control unit 39 appropriately changes the laser irradiation condition so that the preset heating temperature can be maintained within a predetermined range based on the received detection result of the heating temperature, and controls the output of the laser light emitted from the laser light source 33. The target heating temperature is set in advance using the operation controller 40. For example, the heating temperature is set in consideration of the material of the lens 8 so that the dye can be fixed to the lens 8. Although the heating temperature is set depending on the resin material, the heating temperature is set at a heating temperature necessary for fixing the dye and at which re-sublimation of the dye hardly occurs. Such heating temperature is preferably in the range of 100°C to 200°C, and more preferably 110°C to 180°C. Although a portion of the dye attached to the lens 8 may be sublimated depending on the set heating temperature, since the substantially same heating temperature can be maintained over the entire region of the surface to be dyed of the lens, the sublimation of the dye is substantially the same regardless of the irradiation position of the lens, and the occurrence of color unevenness is suppressed.

For example, the lens information may be acquired by the control unit 39 by receiving the lens information acquired by another device by receiving means. In addition, for example, the lens information may be acquired by the control unit 39 by receiving the lens information input by the examiner using the operation controller 40.

FIG. 4 is a diagram illustrating an example of a two-dimensional temperature detection result by the thermo-camera 50 after the first irradiation with the laser light has been performed. As illustrated in FIG. 4, for example, a two-dimensional temperature distribution P is acquired by the thermo-camera 50. In FIG. 4, the darker the hatching, the higher the temperature. For example, in FIG. 4, the temperature increases toward a central region. For example, in the first irradiation of the laser light, it is irradiated with the laser light under the same irradiation conditions. Therefore, since the thickness of the lens is thinner toward a central region P1 of the lens 8, the temperature is likely to rise. Therefore, the temperature of the central region P1 is higher than that of a peripheral region P2.

For example, the control unit 39 receives the two-dimensional temperature distribution P and appropriately changes the irradiation condition of the laser light based on the two-dimensional temperature distribution P. For example, the control unit 39 controls the laser light source 33 to sequentially adjust the output of the laser light so that the heating temperature preset by the operation controller 40 and the heating temperature in the two-dimensional temperature distribution P are substantially the same as each other. In addition, for example, the control unit 39 analyzes the two-dimensional temperature distribution P on the lens 8 and controls the laser light source 33 to sequentially adjust the output of the laser light so that the temperature difference between the irradiation positions of the laser light on the lens 8 does not exceed a predetermined threshold value. The predetermined threshold value can be obtained in advance by experiments or simulations.

For example, it is more preferable that the control unit 39 changes the irradiation condition of the laser light so that the temperature of each irradiation position of the laser light on the lens 8 rises as uniformly as possible toward the target temperature. In the present example, since the two-dimensional temperature distribution P of the lens 8 can be detected, the irradiation condition of the laser light can be set in consideration of the temperature of the entire region of the surface to be dyed on the lens 8. For example, the control unit 39 controls the laser light source 33 based on the detected two-dimensional temperature distribution P to sequentially adjust the output of the laser light so that the temperature of the entire resin body rises uniformly toward the target temperature.

In the present example, the control unit 39 controls the output of the laser light emitted from the laser light source 33. In the present example, the control unit 39 sets the second irradiation condition of the laser light based on the temperature detection result at the timing when the first irradiation of the laser light is completed. In addition, in the present example, the control unit 39 sets the third irradiation condition of the laser light based on the temperature detection result at the timing when the second irradiation of the laser light is completed. That is, in the present example, for example, in the second and subsequent irradiation of the laser light, the control unit 39 repeatedly performs the feedback control of acquiring the two-dimensional temperature distribution detected by the thermo-camera 50 at the timing when the irradiation of the laser light at each time (each cycle) is completed and setting the irradiation condition of the laser light based on the detection result.

As a matter of course, the timing of performing the feedback control is not limited to the above configuration. The feedback control may be performed at any timing. As an example, the feedback control may be performed in real time. In this case, for example, the thermo-camera 50 may sequentially and two-dimensionally detect the temperature in real time, and sequentially change the laser irradiation condition in real time based on the detected detection result (including changing during laser irradiation at a predetermined cycle).

In the present example, the irradiation condition is changed to adjust the output of the laser light emitted from the laser light source, but the present invention is not limited thereto. For example, it is also possible to maintain the heating temperature set by changing other laser irradiation conditions such as changing the defocused state of the laser light on the lens 8 by using an optical member, emitting the laser light in a pulsed manner, or changing the irradiation time at the laser irradiation position by changing the scanning speed.

As described above, for example, in the present example, the dyeing apparatus is provided with the laser light irradiation means for emitting laser light toward the resin body having the dye attached to the surface thereof, the scanning means for relatively scanning the resin body with the laser light emitted from the laser light irradiation means, and the control means for controlling the scanning means to change the irradiation position of the laser light on the resin body. In addition, the control means may control the scanning means to heat the resin body having the dye attached to the surface thereof by repeatedly irradiating the two-dimensional region on the resin body with the laser light a plurality of times, for fixing the dye on the resin body. With such a configuration, for example, since the dyeing apparatus according to the present example repeatedly heats the entire two-dimensional region, it is possible to suppress variations in the heating temperature on the resin body and perform dyeing while suppressing color unevenness.

In addition, for example, the control means may control to heat the resin body having the dye attached to the surface thereof by repeatedly irradiating the two-dimensional region on the resin body with the laser light a plurality of times while changing the irradiation condition of the laser light, for fixing the dye on the resin body. With such a configuration, for example, since it is possible to irradiate with the laser light considering the state of the resin body such as high and low temperature (temperature is high, temperature is low, and the like), easiness of temperature change (temperature is easy to change, temperature is hard to change, and the like), it is possible to further suppress variations in heating temperature on the resin body. As a result, it is possible to easily perform dyeing while suppressing the color unevenness.

In addition, for example, the dyeing apparatus may be provided with the temperature detection means that detects the temperature of the resin body. In this case, for example, the control means may control to heat the resin body having the dye attached to the surface thereof by repeatedly irradiating the two-dimensional region on the resin body with the laser light a plurality of times while changing the irradiation condition of the laser light based on the detection result of the temperature detection means, for fixing the dye on the resin body. With such a configuration, for example, even in a case where the temperature on the resin body is not the expected temperature during the irradiation of the laser light, since the irradiation of the laser light can be performed while grasping the actual temperature state, the irradiation of the laser light can be performed according to the temperature change. As a result, since it is possible to further suppress variations in temperature on the resin body, it is possible to perform dyeing of the resin body with further suppressed color unevenness.

In addition, for example, the temperature detection means may two-dimensionally detect the temperature of the resin body. As described above, for example, since the irradiation conditions can be changed while grasping the temperature distribution of the entire resin body by two-dimensionally detecting the temperature, more appropriate irradiation conditions can be set and color unevenness can be suppressed. In addition, for example, in a case where the resin body is heated by the irradiation of the laser light, the temperature may rise after a time lag since the irradiation of the laser light has been performed. By detecting the temperature two-dimensionally, since it is possible to capture the temperature change after the irradiation of the laser light has been performed, and it is possible to change the irradiation condition while grasping the temperature distribution of the entire resin body, more appropriate irradiation conditions can be set and color unevenness can be suppressed.

In addition, for example, the temperature detection means may include at least the thermo-camera. For example, by using the thermo-camera, it is easy to detect a temperature change secondarily.

In addition, for example, for example, the control means may control to irradiate the two-dimensional region of the resin body with the laser light in the second and subsequent irradiation of the laser light, while changing the irradiation condition of the laser light based on the detection result of the temperature detection means. With such a configuration, for example, the temperature change state of the resin body after the first irradiation of the laser light under the same irradiation condition can be detected, and the irradiation conditions in the second and subsequent laser light can be set. Therefore, it is possible to detect the characteristic of the temperature change for each resin body, and it is possible to set the irradiation condition of the laser light according to the characteristic. As a result, it is possible to perform dyeing while suppressing color unevenness.

In the present example, as a method of providing (applying) the dye onto the lens surface, a method of heating the sublimable dye in vacuum to deposit the dye on the lens is used, and the method is not limited thereto. For example, the sublimable dye may be sublimated under atmospheric pressure and deposited on the lens surface. In addition, it is also possible to apply a dye to the lens surface by, for example, a spin coating method. For example, in a case where the dye is applied to the lens surface by the spin coating method, a hydrophilic resin film containing the dye may be formed on the lens surface by spin coating a hydrophilic resin containing the dye.

Hereinafter, the present disclosure will be specifically described with reference to experimental examples, and the present disclosure is not limited to the following experimental examples. In Experimental Example 1 below, the resin body was relatively scanned with the laser light a plurality of times in a spiral manner, and the resin body having the dye attached to the surface thereof was heated to fix the dye on the resin body. In addition, in Experimental Example 2, in addition to a control of Experimental Example 1, the temperature of the resin body was two-dimensionally detected by the temperature detection means, and the irradiation of the laser light was performed while changing the laser light irradiation conditions based on the detection results. The distortion of the dyed resin body, the temperature difference on the resin body, and the dyeing quality obtained in the experimental example were evaluated.

### <Experimental Example 1>

A coloring layer was printed on a dyeing substrate (quality PPC paper) having a paper thickness of 100 µm by a printer (EPSON PX-6250S) using PC draw software to attach a dye. As a sublimable ink used for printing, a disperse dye (water-based) manufactured by NIDEK Co., Ltd. was used, and the hue was determined to be gray (compounding ratio red : blue : yellow = 153 : 80 : 250). A dyeing substrate was manufactured as described above.

Dyeing was performed using the dyeing substrate obtained in this manner. The dyeing substrate and the MR8 lens (S-0.00) were attached to a jig, and the jig was put into a vacuum gas phase transfer machine (TTM-1000 manufactured by NIDEK Co., Ltd.) to perform a dye deposition work on the MR8 lens. The condition at this time was that the distance between the dyeing surface side of the MR8 lens and the dyeing substrate was 5 mm. After lowering the atmospheric pressure in the vacuum gas phase transfer machine to 0.5 kPa with a pump, the surface temperature of the dyeing substrate was heated to 225°C with a heating unit (a halogen lamp was used in this experimental example). The MR8 lens has a refractive index of 1.60. The temperature near the dyeing substrate was measured with a temperature sensor, and when the temperature reached 225°C, the halogen lamp was simultaneously turned off to sublimate and attach the dye.

The MR8 lens to which the dye was attached was set on a stage of a dyeing apparatus (GEM-30A manufactured by Laser Coherent Co., Ltd.). A thermo-camera (HTPA 80 × 64 dR2L 10.5/0.95 F7.7HiA manufactured by Heimann Co., Ltd.) is installed in the dyeing apparatus. The two galvanometer mirrors of the dyeing apparatus were controlled to scan the MR8 lens with the laser light in a spiral manner to fix the dye on the MR8 lens. In the irradiation of the laser light, irradiation of the laser light was performed 60 times (cycle).

When scanning in a spiral manner, spiral scanning was performed so that the entire region of the MR8 lens was irradiated with the laser light, while moving the MR8 lens inward so that the scanning radius was narrowed by 2 mm. The irradiation conditions of the laser light at this time were such that laser light having a beam diameter of approximately 2.0 mm was emitted from the laser light source, the laser light was bent by using a galvanometer mirror, and thereafter the fθ lens (focal distance: 100 mm) was passed through, the distance to the lens was set to 300 mm, and irradiation was performed so that the spot diameter was approximately 22 mm on the MR8 lens by defocusing. The irradiation conditions of the laser light were set so that the surface temperature at each part of the MR8 lens was 175°C, the output of the laser light was constant at 30 W, the scanning speed of a peripheral region was 500 mm/min, and the scanning speed of a central region (central region with a radius of 30 mm of MR8 lens) was 750 mm/min.

The MR8 lens dyed as described above was evaluated. The same evaluation was performed for the following. The results are illustrated in Table 1.

### [Lens Distortion Evaluation]

For the dyed MR8 lens, a change in the shape of the dyed MR8 lens was visually confirmed to confirm whether or not distortion was generated.
Large distortion was generated: B
Substantially no distortion was generated: A

### [Evaluation of Temperature Difference]

The two-dimensional temperature distribution of the lens was detected using a thermo-camera for the lens at the time when the irradiation of the laser light was completed. In the detected two-dimensional temperature distribution, the temperature at each of the center position and four peripheral positions of the lens (upper right, upper left, lower right, and lower left of the lens) was confirmed, and it was confirmed whether or not the temperature difference exceeds a predetermined threshold value (setting to 50°C in this experimental example).
Temperature difference exceeds threshold value: C
Temperature difference is within threshold value: A

### [Quality Evaluation of Dyeing]

For the dyed MR8 lens, color unevenness in the shape of the dyed MR8 lens was visually confirmed to confirm whether color unevenness is occurred.
Color unevenness is seen: C
Substantially no color unevenness is seen: B
No color unevenness is seen: A

### <Experimental Example 2>

The dyed MR8 lens was evaluated in the same manner as in Example 1 except that the irradiation method of the laser light in the dyeing apparatus was changed to the irradiation method using the thermo-camera. The results are illustrated in Table 1. In the irradiation of the laser light, first, in Experimental Example 2, pre-irradiation was performed 20 times (cycles) in the irradiation of the laser light. In the pre-irradiation, when scanning in a spiral manner, spiral scanning was performed so that the entire region of the MR8 lens was irradiated with the laser light, while moving the MR8 lens inward so that the scanning radius was narrowed by 2 mm. The irradiation conditions of the laser light at this time were such that laser light having a beam diameter of approximately 2.0 mm was emitted from the laser light source, the laser light was bent by using a galvanometer mirror, and thereafter the fθ lens (focal distance: 100 mm) was passed through, the distance to the lens was set to 300 mm, and irradiation was performed so that the spot diameter was approximately 22 mm on the MR8 lens by defocusing. The irradiation conditions of the laser light were set so that the surface temperature at each part of the MR8 lens was 175°C, the output of the laser light was constant at 30 W, the scanning speed of a peripheral region was 500 mm/min, and the scanning speed of a central region (central region with a radius of 30 mm of MR8 lens) was 750 mm/min. In the pre-irradiation of 20 times, the irradiation of the laser light was repeatedly performed under the same irradiation condition without changing the irradiation condition of the laser light. After the pre-irradiation was completed, laser irradiation was continuously performed 40 times. In the irradiation of the laser light after the completion of the pre-irradiation, the surface temperature of the MR8 lens was two-dimensionally detected by the thermo-camera, the output condition at each irradiation position of the laser light was set based on the detection result, and the irradiation of the laser light was performed while sequentially adjusting the set output. The temperature detection by the thermo-camera was performed every time one scanning was completed. In addition, each time one irradiation of the laser light was completed, the output condition of the laser light of the next cycle was set based on the detected temperature detection result by the thermo-camera. In the present experimental example, as the output condition of the laser light, the output condition was set so that the target heating temperature set in advance (197°C in the present experimental example) and the heating temperature at each irradiation position two-dimensionally detected by the thermo-camera were set to be substantially the same, and the temperature difference between the irradiation positions of the laser light does not exceed a predetermined threshold value (50°C in the present experimental example).

**[Table 1]**

| | Core temperature | upper right temperature | upper left temperature | lower right temperature | lower left temperature | Temperature difference | Distortion evaluation | Temperature difference evaluation | Color unevenness evaluation |
|---|---|---|---|---|---|---|---|---|---|
| Experimental Example 1 | 220°C | 172°C | 181°C | 178°C | 176°C | 48°C | A | A | A |
| Experimental Example 2 | 197°C | 170°C | 179°C | 178°C | 174°C | 27°C | A | A | A |

### (Results)

As illustrated in Table 1 shown above, from Experimental Example 1, in a case where the lens was relatively scanned with the laser light a plurality of times in a spiral manner, and the lens having the dye attached to the surface thereof was heated to fix the dye on the resin body, it was illustrated that it is possible to further suppress the variation in the heating temperature on the lens, and to perform the dyeing with suppressed the color unevenness, while suppressing the distortion of the lens.

In addition, from Experimental Example 2, in addition to the control of Experimental Example 1, the temperature of the resin body is two-dimensionally detected by the temperature detection means, and the irradiation of the laser light is performed while changing the irradiation condition of the laser light based on the detection result, so that it was illustrated that it is possible to further suppress the variation in the heating temperature on the lens, as compared with Experimental Example 1. That is, it was illustrated that it was possible to perform dyeing with further suppressed color unevenness.

- 1: dyeing substrate
- 8: lens
- 20: vacuum gas phase transfer machine
- 30: dyeing apparatus
- 32: stage
- 33: laser light source
- 36: optical scanner
- 38: drive mechanism
- 39: control unit
- 40: operation controller
- 41: memory
- 100: dyeing substrate preparation apparatus

## Claims

1. A dyeing apparatus (30) for fixing a dye on a resin body (8) by heating the resin body (8) having the dye attached to a surface of the resin body, the dyeing apparatus comprising:
laser light irradiation means (33) for emitting laser light toward a resin body having a dye attached to a surface of the resin body (8);
scanning means (36) for relatively scanning the resin body with the laser light emitted from the laser light irradiation means (33); and
control means (38) for controlling the scanning means to change an irradiation position of the laser light on the resin body; and
temperature detection means (50) for detecting a temperature of the resin body,
wherein the control means (38) is configured to control the scanning means (36) to heat the resin body (8) having the dye attached to the surface thereof by repeatedly irradiating a two-dimensional region on the resin body (8) with the laser light a plurality of times, while changing an irradiation condition of the laser light based on a detection result of the temperature detection means (50), for fixing the dye on the resin body (8),
**characterized in that** the temperature detection means (50) is configured to two-dimensionally detect the temperature of the entire resin body (8).

2. The dyeing apparatus (30) according to claim 1,
wherein the temperature detection means (50) includes at least a thermo-camera.

3. The dyeing apparatus (30) according to any one of claims 1 and 2,
wherein the control means (38) is configured to control to irradiates the two-dimensional region on the resin body (8) with the laser light in a second and subsequent irradiation of the laser light, while changing the irradiation condition of the laser light based on the detection result of the temperature detection means (50).

4. A dyeing method of fixing a dye on a resin body (8) by heating the resin body (8) having the dye attached to a surface of the resin body (8), the dyeing method comprising:
a control step of emitting laser light toward a resin body (8) having a dye attached to a surface of the resin body (8), and of relatively scanning the resin body (8) with the laser light by changing an irradiation position of the laser light; and
a temperature detection step of detecting a temperature of the resin body (8),
wherein in the control step, the resin body (8) having the dye attached to the surface thereof is heated by repeatedly irradiating a two-dimensional region on the resin body (8) with the laser light a plurality of times, while changing the irradiation condition of the laser light based on a detection result in the temperature detection step, for fixing the dye on the resin body (8),
**characterized in that** in the temperature detection step, the temperature of the entire resin body (8) is two-dimensionally detected.

5. The dyeing method according to claim 4,
wherein in the temperature detection step, the temperature of the resin body (8) is two-dimensionally detected with using at least a thermo-camera.

6. The dyeing method according to any one of claims 4 and 5,
wherein in the control step, the two-dimensional region on the resin body (8) is irradiated with the laser light in a second and subsequent irradiation of the laser light, while changing the irradiation condition of the laser light based on the detection result in the temperature detection step.

## Patentansprüche

1. Färbevorrichtung (30) zum Fixieren eines Farbstoffs an einen Harzkörper (8) durch Erhitzen des Harzkörpers (8), der den an einer Oberfläche des Harzkörpers (8) angebrachten Farbstoff aufweist, wobei die Färbevorrichtung umfasst:
Laserlicht-Bestrahlungsmittel (33) zum Emittieren von Laserlicht in Richtung eines Harzkörpers, der einen an einer Oberfläche des Harzkörpers (8) angebrachten Farbstoff aufweist;
Abtastmittel (36) zum relativen Abtasten des Harzkörpers mit dem Laserlicht, das von dem Laserlicht-Bestrahlungsmittel (33) ausgestrahlt ist; und
Steuermittel (38) zum Steuern des Abtastmittels, um eine Bestrahlungsposition des Laserlichts auf dem Harzkörper zu ändern; und
Temperaturerfassungsmittel (50) zum Erfassen einer Temperatur des Harzkörpers,
wobei das Steuermittel (38) konfiguriert ist, um das Abtastmittel (36) zu steuern, um den Harzkörper (8), der den an der Oberfläche davon angebrachten Farbstoff aufweist, durch wiederholtes Bestrahlen eines zweidimensionalen Bereichs auf dem Harzkörper (8) mit dem Laserlicht mehrmalig zu erwärmen, beim Ändern einer Bestrahlungsbedingung des Laserlichts basierend auf einem Erfassungsergebnis des Temperaturerfassungsmittels (50), um den Farbstoff an den Harzkörper (8) zu fixieren,
**dadurch gekennzeichnet, dass** das Temperaturerfassungsmittel (50) konfiguriert ist, um die Temperatur des gesamten Harzkörpers (8) zweidimensional zu erfassen.

2. Färbevorrichtung (30) nach Anspruch 1,
wobei das Temperaturerfassungsmittel (50) mindestens eine Thermokamera aufweist.

3. Färbevorrichtung (30) nach einem der Ansprüche 1 und 2,
wobei das Steuermittel (38) konfiguriert ist, um eine Bestrahlung des zweidimensionalen Bereichs an dem Harzkörper (8) mit dem Laserlicht in einer zweiten und nachfolgenden Bestrahlung des Laserlichts zu steuern, während die Bestrahlungsbedingung des Laserlichts basierend auf dem Erfassungsergebnis des Temperaturerfassungsmittels (50) geändert wird.

4. Färbeverfahren zum Fixieren eines Farbstoffes an einen Harzkörper (8) durch Erhitzen des Harzkörpers (8), der den an einer Oberfläche des Harzkörpers (8) angebrachten Farbstoff aufweist, wobei das Färbeverfahren aufweist:
einen Steuerschritt zum Emittieren von Laserlicht in Richtung eines Harzkörpers (8), der einen an einer Oberfläche des Harzkörpers (8) angebrachten Farbstoff aufweist, und zum relativen Abtasten des Harzkörpers (8) mit dem Laserlicht durch Änderung einer Bestrahlungsposition des Laserlichts; und
einen Temperaturerfassungsschritt zum Erfassen einer des Harzkörpers (8),
wobei in dem Steuerschritt der Harzkörper (8), der den an der Oberfläche davon angebrachten Farbstoff aufweist, durch wiederholtes Bestrahlen eines zweidimensionalen Bereichs an den Harzkörper (8) mit dem Laserlicht mehrmalig erhitzt wird, während die Bestrahlungsbedingung des Laserlichts basierend auf einem Erfassungsergebnis in dem Temperaturerfassungsschritt geändert wird, um den Farbstoff an dem Harzkörper (8) zu fixieren,
**dadurch gekennzeichnet, dass** in dem Temperaturerfassungsschritt die Temperatur des gesamten Harzkörpers (8) zweidimensional erfasst wird.

5. Färbeverfahren nach Anspruch 4,
wobei in dem Temperaturerfassungsschritt die Temperatur des Harzkörpers (8) unter Verwendung von mindestens einer Thermokamera zweidimensional erfasst wird.

6. Färbeverfahren nach einem der Ansprüche 4 und 5,
wobei in dem Steuerschritt der zweidimensionale Abschnitt an dem Harzkörper (8) mit dem Laserlicht in einer zweiten und nachfolgenden Bestrahlung des Laserlichts bestrahlt wird, während die Bestrahlungsbedingung des Laserlichts basierend auf dem Detektionsergebnis in dem Temperaturdetektionsschritt geändert wird.

## Revendications

1. Appareil de teinture (30) pour fixer un colorant sur un corps en résine (8) en chauffant le corps en résine (8) ayant le colorant fixé à une surface du corps en résine, l'appareil de teinture comprenant :
- un moyen d'irradiation de lumière laser (33) pour émettre une lumière laser vers un corps en résine ayant un colorant fixé à une surface du corps en résine (8) ;
- un moyen de balayage (36) pour balayer relativement le corps en résine avec la lumière laser émise par le moyen d'irradiation de lumière laser (33) ; et
- un moyen de commande (38) pour commander le moyen de balayage afin de modifier une position d'irradiation de la lumière laser sur le corps en résine ; et
- un moyen de détection de température (50) pour détecter une température du corps en résine,
dans lequel le moyen de commande (38) est configuré pour commander le moyen de balayage (36) afin de chauffer le corps en résine (8) ayant le colorant fixé à sa surface en irradiant de manière répétée une région bidimensionnelle sur le corps en résine (8) avec la lumière laser une pluralité de fois, tout en modifiant une condition d'irradiation de la lumière laser sur la base d'un résultat de détection du moyen de détection de température (50), pour fixer le colorant sur le corps en résine (8),
**caractérisé en ce que** le moyen de détection de température (50) est configuré pour détecter de manière bidimensionnelle la température de l'ensemble du corps en résine (8).

2. Appareil de teinture (30) selon la revendication 1, dans lequel le moyen de détection de température (50) comprend au moins une caméra thermique.

3. Appareil de teinture (30) selon l'une quelconque des revendications 1 et 2, dans lequel le moyen de commande (38) est configuré pour commander l'irradiation de la région bidimensionnelle sur le corps en résine (8) avec la lumière laser lors d'une seconde irradiation et d'une irradiation ultérieure de la lumière laser, tout en modifiant la condition d'irradiation de la lumière laser sur la base du résultat de détection du moyen de détection de température (50).

4. Procédé de teinture pour fixer un colorant sur un corps en résine (8) en chauffant le corps en résine (8) ayant le colorant fixé à une surface du corps en résine (8), le procédé de teinture comprenant :
- une étape de commande d'émission de lumière laser vers un corps en résine (8) ayant un colorant fixé à une surface du corps en résine (8), et de balayage relatif du corps en résine (8) avec la lumière laser en modifiant une position d'irradiation de la lumière laser ; et
- une étape de détection de température de détection d'une température du corps en résine (8),
dans lequel, dans l'étape de commande, le corps en résine (8) ayant le colorant fixé à sa surface est chauffé en irradiant de manière répétée une région bidimensionnelle sur le corps en résine (8) avec la lumière laser une pluralité de fois, tout en modifiant la condition d'irradiation de la lumière laser sur la base d'un résultat de détection dans l'étape de détection de température, pour fixer le colorant sur le corps en résine (8),
**caractérisé en ce que**, dans l'étape de détection de température, la température de l'ensemble du corps en résine (8) est détectée de manière bidimensionnelle.

5. Procédé de teinture selon la revendication 4, dans lequel, dans l'étape de détection de température, la température du corps en résine (8) est détectée de manière bidimensionnelle en utilisant au moins une caméra thermique.

6. Procédé de teinture selon l'une quelconque des revendications 4 et 5, dans lequel, dans l'étape de commande, la région bidimensionnelle sur le corps en résine (8) est irradiée avec la lumière laser lors d'une seconde irradiation et d'une irradiation ultérieure de la lumière laser, tout en modifiant la condition d'irradiation de la lumière laser sur la base du résultat de détection dans l'étape de détection de température.
